## Europäisches Patentamt
## European Patent Office
## Office européen des brevets

(11) Publication number: **0 064 942**
**B1**

(12) # EUROPEAN PATENT SPECIFICATION

(45) Date of publication of patent specification: **02.04.86**

(51) Int. Cl.⁴: **F 16 D 43/16, E 05 B 65/42**

(21) Application number: **82730062.5**

(22) Date of filing: **06.05.82**

(54) **Centrifugal clutch.**

(30) Priority: **09.05.81 JP 66905/81**

(43) Date of publication of application:
**17.11.82 Bulletin 82/46**

(45) Publication of the grant of the patent:
**02.04.86 Bulletin 86/14**

(84) Designated Contracting States:
**DE FR GB**

(56) References cited:
**DE-C- 63 920**
**GB-A- 647 410**
**US-A-2 217 495**

**IBM TECHNICAL DISCLOSURE BULLETIN, vol. 9, no. 1, June 1966, pp. 76-77, New York (US); D.GADBURY et al.: "Centrifugal clutch"**

(73) Proprietor: **OHI SEISAKUSHO CO., LTD. 14-7, Maruyama 1-chome Isogo-ku Yokohama-shi Kanagawa-ken 235 (JP)**

(72) Inventor: **Kagiyama, Tsutomu 4-333-24 Sengen-cho Nishi-ku Yokohama-shi Kanagawa-ken (JP)**
Inventor: **Takaishi, Tatsuyuki 76 Chiyozaki-cho 3-chome Naka-ku Yokohama-shi Kanagawa-ken (JP)**

(74) Representative: **Lüke, Dierck-Wilm, Dipl.-Ing. Gelfertstrasse 56 D-1000 Berlin 33 (DE)**

## Description

The present invention relates to a centrifugal clutch, capable of connecting or disconnecting the relation in rotation between a driving shaft and a driven shaft, comprising a clutch drum provided with large inner diameter portions and engaging protuberances inwardly projecting from said large inner diameter portions, said clutch drum being loosely rotatable relative to a rotary drive shaft, and a blocking member being radially movable by centrifugal force from an inner position to an outer position in order to engage with one of said protuberances.

There has heretofore been proposed a centrifugal clutch according to DE—C—63 920, in which the blocking member is being accommodated within the retaining hole by means of gravity force, when the clutch body of the drive shaft is in a standstill state and, when the drive shaft and the clutch body are in a driven state, being caused to protrude toward the inner wall of the clutch drum by means of centrifugal force. This centrifugal clutch cannot come to a standstill in all positions of the clutch body, for disconnecting the relation between the driving and the driven shaft. For example, if the axis of the shafts is horizontal and the centrifugal clutch comes to a standstill with the blocking member in the vertical position on the lower side of the clutch body, the blocking member cannot be disconnected from the protuberances of the clutch drum. Further, the large inner diameter portion of the clutch drum is wedge-shaped and therefore complicated in construction.

There have heretofore been proposed further centrifugal clutches having centrifugal force exerted on a spring, those making use of magnetism of an exciting coil, etc. However, these clutches are complicated in construction, entail a disadvantage from an economical point of view and prevent the advancement of productivity.

It is the object of the present invention to provide a centrifugal clutch which is simple in construction, capable of reducing the number of the component parts, excellent in durability, inexpensive in manufacturing cost and operable with high precision in every standstill position of the clutch body, having inside the blocking member.

The present invention solves this object by providing a centrifugal clutch according to the wording of the characterizing clause of patent claim 1. The centrifugal clutch according to the invention is capable to come to a standstill in every position of the shafts and of the clutch body, because the blocking member is disconnected by the magnetic forces of the blocking member itself and of the rotary drive shaft, a part of this forms the blocking member. Further, the centrifugal clutch according to the invention is simple in construction, capable of reducing the number of component parts, excellent in durability and inexpensive in manufacturing cost.

Following is a description by way of example only and with reference to the accompanying drawings of a clutch of carrying the invention into effect.

In the drawings:—

Figure 1 is a plan view illustrating application of one embodiment of a centrifugal clutch according to the present invention to an actuator,

Figure 2 is a cross-sectional view taken along the line II—II in Figure 1,

Figure 3 is a bottom view illustrating the same application, with the bottom plate of a casing removed,

Figure 4 is a lateral cross section showing the centrifugal clutch according to the present invention,

Figure 5 is a front view illustrating a lid member for tightly sealing one end of the centrifugal clutch,

Figure 6 is a longitudinal cross section of the lid member,

Figure 7 is a front view showing a clutch body of the centrifugal clutch,

Figure 8 is a plan view of the clutch body,

Figure 9 is a front view showing a clutch drum of the centrifugal clutch,

Figure 10 is a cross-sectional view taken along the line X—X in Figure 9,

Figure 11 is a front view showing a permanent magnet to be used in the centrifugal clutch; and

Figure 12 is a front view illustrating another embodiment of the clutch drum of the centrifugal clutch.

The present invention will now be described hereinafter in more detail.

The centrifugal clutch of the present invention comprises a clutch drum loosely rotated relative to a rotary drive shaft, a clutch body loosely fitted within the clutch drum and an engaging permanent magnet retained in a retaining hole bored in the clutch body so as to be loosely movable in the radial direction. The rotary drive shaft which serves as a magnetic substance is inserted into the clutch body so that the clutch body may be driven. When the clutch body is not driven, the permanent magnet attracts the rotary drive shaft and is accommodated within the retaining hole. When the clutch body is being driven, the permanent magnet is released from the rotary drive shaft by the centrifugal force of the clutch body, projects toward the inner wall of the clutch drum and is engaged with an engaging protuberance provided in the clutch drum, with the result that the rotation of the clutch body is transmitted to the clutch drum.

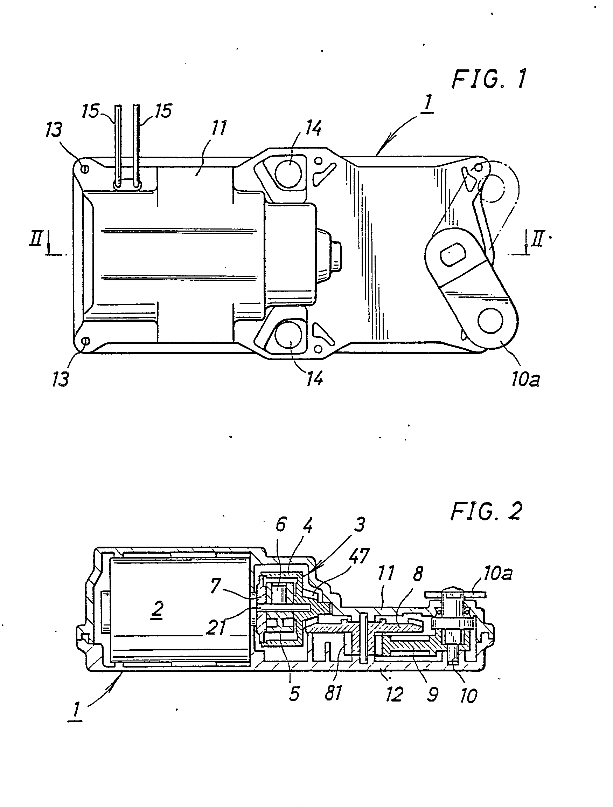

This centrifugal clutch is applicable, for example, to an actuator for driving a motor for use in a door locking apparatus in an automobile as illustrated in Figure 1 through Figure 3.

In an actuator capable of remotely manipulating a door locking apparatus to lock or unlock an automobile door by use of a motor producing clockwise and counterclockwise rotations and also capable of manually operating the door locking apparatus, when the door locking apparatus is manually operated, the manual operation interferes with the motor and forces the motor to be rotated and, as a result, the manual operation is not smoothly effected. To eliminate this adverse problem, a clutch is used and serves to disconnect the motor and the door locking apparatus when the motor stops its rotation.

A motor 2 is disposed on one end side within a casing 1 which has a cover plate 11 and a bottom plate 12 fastened to each other with screws 13. A rotary drive shaft 21 extends from the motor 2 toward the other end side of the casing 1. To the rotary drive shaft 21 is attached a centrifugal clutch 3.

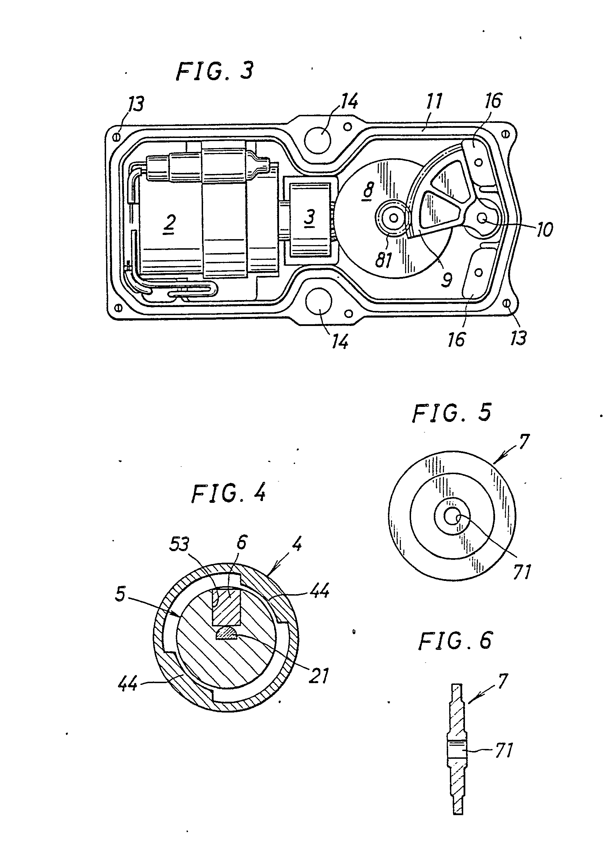

The centrifugal clutch 3 comprises, as illustrated in Figure 4, a clutch drum 4 supported by admitting therein the rotary drive shaft 21 so that the leading end of the rotary drive shaft 21 is loosely rotated around the centre of the clutch drum 4, a clutch body 5 loosely fitted within the clutch drum 4 and driven by the rotary drive shaft 21, an engaging permanent magnet 6 retained by the clutch body 5 so as to be loosely movable in the radial direction, and a lid member 7 allowing itself to be loosely rotated relative to the rotary drive shaft 21 and tightly sealing one end of the clutch drum 4 having the clutch body fitted loosely therein.

A bevel gear 47 is integrally formed with the rear surface of the clutch drum 4 and engaged with a movement transmission bevel gear 8 which rotates round an axis of a direction substantially at right angles relative to the axis of the rotary drive shaft 21. The movement transmission bevel gear 8 is provided on the rear surface thereof integrally with a spur gear 81 which is engaged with a sector gear 9. The sector gear 9 is firmly attached to a swing shaft 10 rotatably supported by the casing 1. To the swing shaft 10, a swing lever 10a is firmly attached.

The actuator is installed at a position suitable for operating the door locking apparatus by means of bolts to be inserted into bolt fitting apertures 14. The leading end of the swing lever 10a is connected to the door locking apparatus through the medium of a link mechanism (not shown). Electric wires 15 are connected to a source of electric power.

The centrifugal clutch 3 will be described in more detail with reference to Figure 4 through Figure 11.

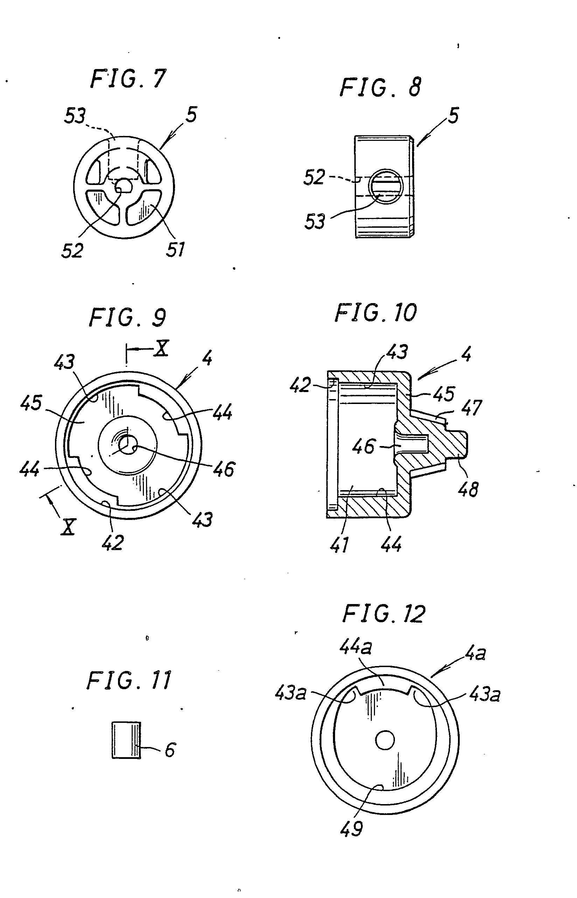

The clutch drum 4 is formed, as illustrated in Figures 9 and 10, in the shape of a cylinder having an empty space 41 opening at one end thereof. The opening end of the empty space 41 is provided with a groove 42 for fitting the lid member 7 therein. The cylindrical clutch drum 4 has large inner diameter portions 43 and engaging protuberances 44 symmetrically protruding inwardly from the large inner diameter portions 43. The rear wall 45 of the clutch drum 4 has an insertion hole 46 bored at the centre thereof for loosely fitting and supporting therein the leading end of the rotary drive shaft 21. A bevel gear 47 is formed on the embossing surrounding the insertion hole 46 on the rear surface side of the rear wall 45. An axial projection 48 protrudes from the centre of the bevel gear 47 and is supported by the cover plate 11 of the casing 1.

The clutch body 5 is formed, as illustrated in Figures 7 and 8, in the shape of a cylinder having holes 51 bored therein for reducing the weight of the clutch body itself and has an outside diameter slightly smaller than the inside diameter of the clutch drum 4 defined by the engaging protuberances 44. The clutch body 5 is thus loosely fitted within the clutch drum 4 with the slight distance left therebetween. The clutch body 5 has a shaft hole 52 of a substantially semilunar cross section bored at the centre thereof for inserting and fitting therein the rotary drive shaft 21 of the same cross section and is driven by the rotary drive shaft 21. Further, the clutch body 5 has a retaining hole 53 which opens outwardly in the radial direction from the shaft hole 52 for loosely movably retaining therein an engaging permanent magnet 6 as illustrated in Figure 11. The engaging permanent magnet 6 attracts the rotary drive shaft 21 as a magnetic substance and is accommodated within the retaining hole 53 when the clutch body 5 is in a standstill state and, when the rotary drive shaft 21 is rotated in a clockwise direction or a counterclockwise direction at a given number of rotation, the engaging permanent magnet protrudes from the retaining hole 53 toward the inner wall of the clutch drum 4 by the centrifugal force larger than its attracting force exerted onto the rotary drive shaft 21 and has the leading end thereof engaged with one end of the engaging protuberance 44 of the clutch drum 4. The engaging permanent magnet in this embodiment is required to have a length large enough not to be released from the retaining hole 53 when it is engaged with the engaging protuberance 44 and to exhibit considerable mechanical strength.

The clutch body 5 is inserted into the clutch drum 4 and the lid member 7 as illustrated in Figures 5 and 6 is fitted in the groove 42 of the clutch drum 4. The lid member 7 has an insertion hole 71 bored therein for loosely fitting therein the rotary drive shaft 21.

Now, the function of the centrifugal clutch according to the present invention will be described hereinafter.

When the rotary drive shaft 21 of the motor 2 is in a standstill state, since the engaging permanent magnet 6 attracts the rotary drive shaft 21 and is accommodated within the retaining hole 53 of the clutch body 5, the clutch body 5 is kept in a state wherein it is loosely rotatable relative to the clutch drum 4 and does not transmit any movement to the clutch drum 4. When the door locking apparatus is manually operated, in this state, this manual operation causes the swing lever 10a to be swung and the resultant movement to be transmitted successively to the sector gear 9, spur gear 81, bevel gear 8, bevel gear 47 and clutch drum 4. Even though the clutch drum 4 is rotated in consequence of the successive transmission of movement, it is loosely rotated round the clutch body 5 because the aforementioned state is maintained. In other words, the rotation of the clutch drum 4 is not transmitted either to the clutch body 5 or to the motor 2.

When the door locking apparatus is operated mechanically, i.e. by means of the motor 2, a switching operation for either locking or unlocking the door causes an electric current to be supplied to the motor 2 and the rotary drive shaft 21 to be rotated in the direction corresponding to the switching operation. When the rotary drive shaft 21 is rotated at a given number of rotation, the centrifugal force generated becomes larger than the attracting force of the engaging permanent magnet 6 to the rotary drive shaft 21 and causes the engaging permanent magnet 6 to loosely move within the retaining hole 53, protrude from the retaining hole 53 toward the inner wall of the clutch drum 4, come into contact with and slide on the large inner diameter portion 43 of the clutch drum 4, and engage with one end of the engaging protuberance 44. As a result, the rotation of the clutch body 5 given by the motor 2 is transmitted successively to the clutch drum 4, bevel gear 47, bevel gear 8, spur gear 81 and sector gear 9 and, consequently, the swing lever 10a is swung either rightwards or leftwards and causes the door locking apparatus to be operated through the medium of the link mechanism. Denoted by 16 in Figure 3 is shock-absorbing means for receiving the sector gear 9 at the opposite extremities of the swinging movement of the sector gear 9.

Figure 12 illustrates another embodiment of the clutch drum according to the present invention. A clutch drum 4a in this embodiment has a single engaging projection 44a formed on the inner wall thereof and has large inner diameter portions 43a formed in the vicinity of the opposite lateral ends of the engaging projection 44a and the minimum diameter portion 49 formed on the inner wall of the clutch drum 4a opposed to the centre of the engaging projection 44a so that the inner diameter of the clutch drum is gradually decreased from the large inner diameter portions 43a toward the minimum diameter portion 49. When the engaging permanent magnet 6 protrudes toward the inner wall of the clutch drum 4a, in this embodiment, there is few possibility of the engaging permanent magnet 6 protruding directly toward the large inner diameter portion 43a. The engaging permanent magnet 6, at first, protrudes towards the portion in the vicinity of the minimum inner diameter portion 49, then comes into sliding contact with the portion and continues its sliding movement toward the large inner diameter portion 43a. That is to say, since the projecting stroke of the engaging permanent magnet 6 becomes large gradually from the vicinity of the minimum inner diameter portion 49 toward the large inner diameter portion 43a, the clutch drum 4a in this embodiment has an advantage that the noise generated when the engaging permanent magnet 6 protrudes toward the inner wall of the clutch drum 4a can be reduced.

According to the present invention, as described above, since a permanent magnet is used as an engaging member which fulfils its function when a centrifugal clutch is in motion, there can be provided a centrifugal clutch simple in construction, capable of reducing the number of the component parts, excellent in durability, inexpensive in manufacturing cost and operable with high precision.

Further, the present invention enjoys advantages that it is possible to obtain high waterproofing and dust-preventing effects where the clutch drum is tightly sealed with the lid member, to obtain immediate engagement between the clutch drum and the clutch body during the operation of the centrifugal clutch where a number of engaging protuberances are provided on the inner wall of the clutch drum, and to cause the actuator to be operated smoothly because the speed of rotation is reduced by use of a plurality of gears. Thus, the present invention makes a great contribution to the field of this art.

**Claims**

1. A centrifugal clutch comprising a clutch drum (4) provided with large inner diameter portions (43) and engaging protuberances (44) inwardly projecting from said large inner diameter portions (43), said clutch drum (4) being loosely rotatable relative to a rotary drive shaft (21), and a blocking member (6) being radially movable by centrifugal force from an inner position to an outer position in order to engage with one of said protuberances (44), characterised in that said blocking member (6) consists of a permanent magnet which is retained in a radial bore (53) in a clutch body (5) loosely fitted within said clutch drum (4), said clutch body being mounted on said rotary drive shaft (21) which comprises a magnetic substance so that said blocking member (6) is retained within said bore (53) by its magnetic attraction to said rotary drive shaft (21) when said clutch body (5) stands still, and said blocking member (6) is caused to protrude toward the inner wall of said clutch drum (4) by means of the centrifugal force when said clutch body (5) is rotated.

2. A centrifugal clutch according to claim 1, further comprising a lid member (7) tightly sealing one end of said clutch drum (4) which has said clutch body (5) fitted loosely therein and allowing itself to be loosely rotated relative to said rotary drive shaft (21), whereby waterproofing and dust-preventing effects of the centrifugal clutch are highly enhanced.

3. A centrifugal clutch according to any of claims 1 and 2, wherein said clutch drum has the inner wall thereof provided with an engaging projection (44a), large diameter portions (43a) between which said engaging projection (44a) intervenes and a minimum diameter portion (49) opposed to the centre of said engaging projection (44a), and has the inner diameter thereof decreased gradually from the large diameter portions (43a) toward said minimum diameter portion (49).

## Revendications

1. Embrayage centrifuge avec un cylindre d'embrayage (4) avec des éléments (43) d'un grand diamètre et avec des saillies (44) à l'intérieur de ces éléments, le cylindre (4) étant rotatif autour d'un arbre moteur (21) et avec un élément de blocage (6) étant déplaçable radialement, moyennant la force centrifuge, d'une position intérieure vers une position extérieure dans le but de mordre l'une des saillie, caractérisé par le fait que l'élément de blocage (6) consiste en un aimant permanent maintenu dans un alésage radial (53) d'un corps d'embrayage (5) disposé avec jeu dans le cylindre d'embrayage (4), le corps d'embrayage (5) étant monté sur l'arbre moteur (21) contenant une substance magnétique de sorte que l'élément de blocage (6) soit maintenu sur l'arbre moteur (21) par attraction, si le corps d'embrayage (5) est à l'arrêt et que l'élément de blocage (6) soit déplacé par force centrifuge vers la paroi intérieure du cylindre d'embrayage (4), si le corps d'embrayage (5) tourne.

2. Embrayage centrifuge selon revendication 1, caractérisé par le fait qu'il comprend à l'une des extrémités du cylindre d'embrayage (4) un élément de recouvrement étanche (7), le corps d'embrayage (5) y étant logé de façon mobile et est rotatif par rapport à l'arbre moteur (21), assurant l'étanchéité à l'eau et à la poussière de l'embrayage centrifuge.

3. Embrayage centrifuge selon l'une des revendications 1 et 2, caractérisé par le fait que la paroi intérieure du calindre d'embrayage est munie d'une saillie (44a) pouvant être mise en prise, d'éléments (43a) de grand diamètre entre lesquels mord la saillie (44a), ainsi qu'un élément (49) monté en sens contraire de la saillie (44a) et d'un diamètre minimal et que leur diamètre intérieur est réduit graduellement par les parties (43a) de grand diamètre par rapport à l'élément (49).

## Patentansprüche

1. Fliehkraftbetätigte Kupplung mit einer Kupplungsstrommel (4) mit Teilen (43) mit einem großen Innendurchmesser und mit nach innen von besagten Teilen (43) mit einem großen Innendurchmesser sich erstreckenden Vorsprüngen (44), wobei besagte Kupplungstrommel (4) um eine Antriebsdrehwelle (21) drehbar ist, und mit einem Blockierglied (6), das radial aufgrund von Zentrifugalkraft aus einer inneren Position in eine äußere Pósition zwecks Eingriffnahme mit einem der besagten Vorsprünge bewegbar ist, dadurch gekennzeichnet, daß besagtes Blockierglied (6) aus einem Permanentmagnet besteht, der in einer Radialbohrung (53) in einem lose innerhalb besagter Kupplungstrommel (4) angeordneten Kupplungskoerper (5) gehalten wird, wobei besagter Kupplungskörper an besagter Antriebswelle (21) angebracht ist, die eine magnetische Substanz enthält, sodaß besagtes Blockierglied (6) innerhalb besagter Bohrung (53) durch die magnetische Anziehung an besagte Antriebsdrehwelle (21) gehalten wird, wenn besagter Kupplungskörper (5) still steht, und sodaß besagtes Blockierglied (6) zur inneren Wand der besagten Kupplungstrommel (4) mittels der Zentrifugalkraft bewegt wird, wenn besagter Kupplungskörper (5) gedreht wird.

2. Fliehkraftbetätigte Kupplung nach Anspruch 1, dadurch gekennzeichnet, daß sie ein ein Ende der besagten Kupplungstrommel (4) dicht abschließendes Deckelelement (7) enthält, wobei der besagte Kupplungskörper (5) lose darin angebracht ist und bezüglich der besagten Antriebsdrehwelle (21) drehbar ist, wodurch Wasserdichtheit und staubverhindernde Wirkungen der fliehkraftbetätigten Kupplung begünstigt werden.

3. Fliehkraftbetätigte Kupplung nach einem der Ansprüche 1 und 2, dadurch gekennzeichnet, daß die Innenwand der besagten Kupplungstrommel mit einem in Eingriff bringbaren Vorsprung (44a), mit Teilen (43a) mit großem Durchmesser, zwischen denen besagter Vorsprung (44a) eingreift, sowie einem entgegengesetzt zum Zentrum des besagten Vorsprungs (44a) angeordneten Teil (49) mit einem minimalen Durchmesser versehen ist, und daß ihr Innendurchmesser graduell von den Teilen (43a) mit großem Durchmesser zu besagtem Teil (49) mit einem minimalen Durchmesser abnimmt.

FIG. 1

15 15 13 11 14 1

II II

13 14 10a

FIG. 2

6 4 3 47 11 8 10a

7

2

21

1 5 81 12 9 10

1

FIG. 3

FIG. 5

FIG. 4

FIG. 6

**FIG. 7**

**FIG. 8**

**FIG. 9**

**FIG. 10**

**FIG. 11**

**FIG. 12**